# EUROPEAN PATENT APPLICATION

(11) **EP 3 915 667 A1**
(43) Date of publication of application: **01.12.2021**
(21) Application number: 20710315.1
(22) Date of filing: 20.01.2020
(51) Int. Cl.: B01D 53/22, B64B 1/40, B64B 1/58

(54) **ACTIVE SYSTEM FOR GAS SEPARATION**

(30) Priority: 21.01.2019 PT 2019115270
(71) Applicant: Omnidea, Lda., 3510-017 Lisboa (PT)
(72) Inventor: PARDAL, Tiago, 1825-114 Lisboa (PT)
(74) Representative: Pereira da Cruz, Joao
(86) International application number: PCT/PT2020/050002
(87) International publication number: WO 2020/153859

(57) **Abstract**

The present invention consists of a system that enhances and allows for the isolation and prevention of contamination, by diffusion, of two distinct gases separated by a membrane. The present invention is of particular use in aerostats. The present invention is characterized by the establishment of a capture volume (3) of the gases diffused by the introduction of a component (for example, a screen of porous material), and allows extraction of the gas that results from mixture of the interior gas (1) (typically lighter than air) and the exterior gas (5) (typically air) by a sub-pressure subsystem (6). The gas that results from mixture due to diffusion is removed by said sub-pressure subsystem (6) (for example, a vacuum pump), and can then be separated into the initial gases which are returned to the original sources. The capture volume (3) must be filled with a material that allows for extraction of the gas mixture without the membranes that separate the interior gas (2) from the exterior gas (4) collapsing or adhering to one another.

## Description

### Technical Field

The present invention was developed within the scope of the mechanical engineering, particularly for aeronautical applications withing aerostats and balloons with the objective of improving its efficiency, increasing the lift time therefore reducing the operational costs related to the lighter-than-air gas used to generate the lift. The invented is also included in the broader scope of general gas separation.

### Background of the Invention

The problematic of the diffusion of a gas used to lift an aerostat through the membrane that contains the gas is a known issue with substantial costs for the entities that operate these sorts of aerial vehicles. The problem is double problematic since the diffusion of the gas does not only occur from the inside to the outside, but also in the opposite direction, contaminating the internal gas with air leading to the progressively decreased lift provided to the aerostat. Additionally, in the cases where the internal gas used to provide lift to the aerostat is combustible, the contamination of the interior gas with atmospheric oxygen by diffusion can lead to the creation of an explosive mixture which lead to additional risks and dangers.

The problem of gas separation is especially important in aerostat applications where, on one hand the need of containing the lighter-than-air gas is translated as an efficiency measure of the utmost importance, and on the other hand, there are significant restrictions regarding the weight of the solution adopted to attain such goal. The loss of the internal gas of an aerostat through diffusion through the aerostat envelope or, more precisely, through the membrane whose mission is to retain the lighter-than- air internal gas, as well as the entrance of air to the interior of the membrane (also through diffusion) reduces significantly its lift.

The presently existing solutions available to reduce this diffusion effect are mostly focused ibn increasing the thickness of the envelope and tend to have a substantial impact in terms of weight contribution adversely to the aerostat performance.

The patent application PCT/HU05/00027 is based on an approach intended to improve the gas separation by using a system of double membrane where, essentially, a middle gas layer is established at a higher pressure than the gases being separated.

This would lead to a proportionally lower diffusion of the gases being separated and the middle layer on over pressure would act as the separation mechanism. This document also mentions a vague option using vacuum, which is not a feasible mechanism to remove the diffused gases since no solution is presented to avoid the collapse of the internal and external membranes. Using vacuum would lead the membranes to collapse on each other what would not allow the extraction of any gas present by diffusion - it would only create a membrane whose thickness would equal the sum of the internal and external membranes.

### General Description of the Invention

In a first embodiment, the present disclosure encompasses an active system for gas separation characterized in that an envelope (7) is constituted by internal (2) and external (4) membranes and an intermediary gas porous volume (3) at a absolute pressure lower than the one of both the interior (1) and exterior (5) gases; wherein the gas mixture present in the intermediary volume (3) by diffusion of the interior and exterior gases is actively extracted by a sub-pressure subsystem (6).

In a second embodiment, the disclosure relates to a system for gas separation characterized in that the envelope (7) is constituted by multiple layers of internal membranes (2) with the intermediary gas porous volume (3).

In a third embodiment, the disclosure relates to a system for gas separation further comprising the incorporation of a tubing system in the intermediary gas porous volume (3).

In a fourth embodiment the disclosure relates to a system for gas separation according to claim 3 wherein the tubes used in the tubing system (6) comprise several orifices (8) along their length.

In a fifth embodiment, the disclosure relates to the use of the system of the invention for aerostats, balloons and other aerial devices.

### Brief Description of Drawings

The following figures provide preferred forms of realization of the invention and should not be understood as limiting its scope.

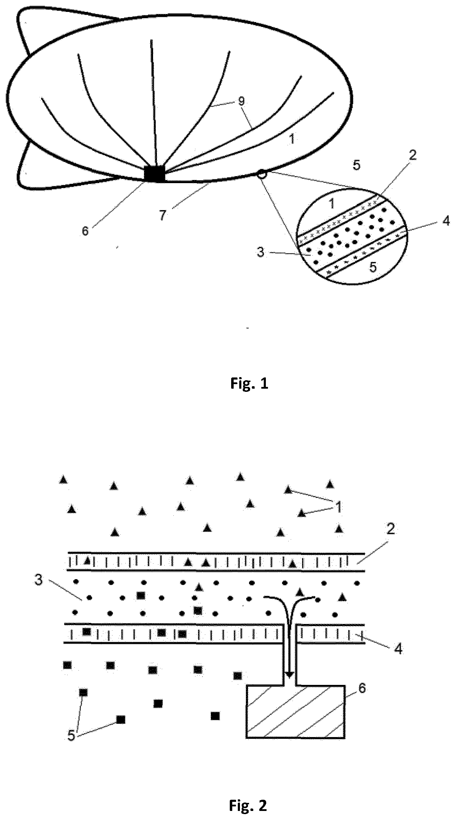

Figure 1 shows an outline of a possible embodiment of the system of the invention, in this case an aerostat or balloon. The invention, as shown in the detail of the enlargement of a section for cutting the envelope (7) of the aerostat (7), consists of an inner gas confining membrane (2), separating the interior gas (1) from the exemplified component (3) as a porous screen that resists collapse due to pressure differences between the inner and outer membranes. The mixture of gases diffused from the inside (1) and the outside (5) by means of diffusion respectively through the inner (2) and outer (4) membranes is captured in the intermediate volume that is formed by the membrane separator component (3) and porous (such as felt or screens used to maintain vacuum in the bags used in the manufacture of parts in composite materials) and the mixture of diffused gases is removed by means of a gas extraction system (6), thus allowing a very more effective separation of indoor (1) and outdoor (5) gases. Finally, the piping system (9) aims to facilitate the extraction of gas from the intermediate volume (3) and to make the low pressure in the said volume (3) more homogeneous.
Figure 2 illustrates the gas mixing process (1) and (5) that occurs through diffusion through the interior and exterior gas containment membranes (2) and (4) and which is removed from the intermediate volume established by the existence of a porous separating screen (3) by a system (6) for removing these gases and later separating them back into the interior gas (1) and exterior gas (5), feeding back the gas (1) that gives support to the aerostat and discarding the contaminating air to the outside.

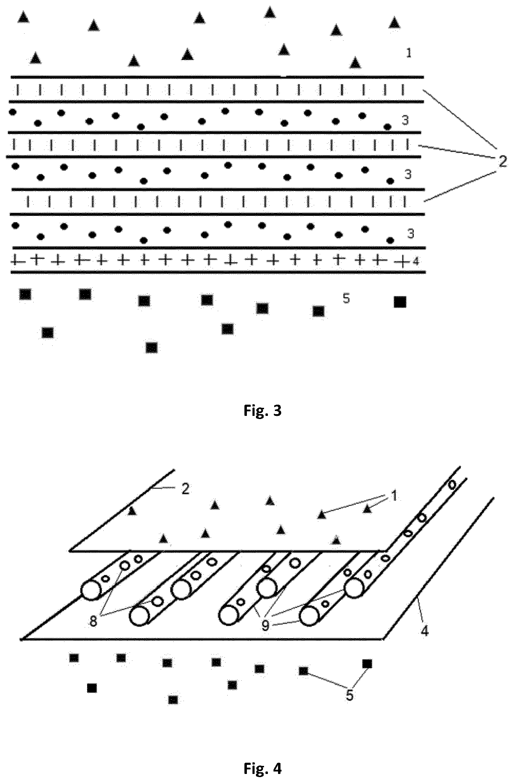

Figure 3 illustrates the application of the active gas separation system using multiple porous layers. This configuration may be necessary, for example, in the case of the use of membranes whose waterproofing is very bad for the gases to be separated, or in cases where it is intended to minimize the loss of the propulsion gas to the extreme (1).
Figure 4 represents a possible configuration of the system that incorporates a tubular system (9) to improve the removal of the gas mixture from the intermediate volume (3). By simultaneously using porous material screens and a distributed pipe system, the task of extracting and maintaining low pressure from the gas mixture is facilitated by the greater pressure homogeneity caused by the distribution of a greater number of gas capture. In order to increase the extraction sites of said gases for the pipe (9), the pipes (9) can have several holes (8) along their surface.

### Detailed Description of the Invention

a component for the middle layer volume (3) consisting of a porous material able of maintaining the porosity to gases after being compressed between the air (5) and the internal gas (1) of the envelope (7). The component for the middle layer volume (3) is installed between the interior (2) and exterior (4) membranes (i.e. the membranes little permeable to the gases being separated) of the envelope (7) of gas.

the component (3) or layer of porous material between the gas containment membranes (2) and (4) serves simultaneously as a lower pressure volume or partial vacuum to capture the interior gas (1) and the exterior gas (5 ) to be kept separate and from where they are extracted or removed by the system (6), which can for example be a vacuum pump, an exhaust fan, or any other gas extraction system, and also as a structural support to prevent collapse and sealing of the inner (2) and outer (4) gas containment membranes, a structural function without which it is not possible to apply the principle underlying this invention.

a tubing subsystem (9), more precisely between the exterior (4) and interior (2) membranes used to contain the gases, with the objective of establishing several extraction zones in the middle volume (3) making the extraction system (6) more homogenous and maintaining sub-pressure or partial vacuum, which is thus facilitated since this greater distribution of direct reception points for a pipeline will reduce the total head loss.The gas separation problem, specially within the scope of the gas separation used for aerostats lift, the membrane containing the lighter-than-air gas used to lift the aerostat is, even if little, permeable to the passage of the interior (1) gas to the outside (5) as well as the opposite, from the atmospheric air (5) to the interior of the aerostat (1). These gaseous transfers occur mainly due to the diffusion through the membranes separating the gases.

obtain a higher (or even complete) separation of the interior gas (1) from the atmospheric air (5) on the outside. The same approach can be used for any system that requires a gas separation. invention has a direct application on aerostats, balloons and similar systems, having a direct consequence in the increased autonomy of such systems leading to increased operation times and reduced costs of operation.the component (3) that constitutes the interior porous layer is placed between the internal (2) and external (4) membranes of the envelope (7) that contains the lighter-than-air gas (1), and can also be achieved using a tubing system (9) that can be, for example, radial, axial, in matrix or internal network within the porous component (3) to allow for a more efficient method of removing the trapped gas from the component using the means of under pressure or vacuum homogenously within the middle layer. The tubes constituting the tubing system (9) can, additionally, have several orifices (8) in order to minimize the number of tubes needed the active system of gas retention can also be constituted by several layers of internal porous (3) layers for gas trapping interwind with several gas separation membranes (2).

## Claims

1. Active system for gas separation **characterized by** an envelope (7) constituted by internal (2) and external (4) membranes and an intermediary gas porous volume(3) at a lower absolute pressure than both the interior (1) and exterior (5) gases from where the gaseous mixture present in the intermediary volume (3) by diffusion of the interior and exterior gases is actively extracted by the sub pressure system (6).

2. System of gas separation according to the claim 1 **characterized by** the envelope (7) being constituted by multiple layers of internal membranes (2) with the intermediary component (3).

3. System of gas separation according to the claim 1 **characterized by** the incorporation of a tubing system (6) in the intermediary volume (3).

4. System for gas separation according to claim 1 and 3 wherein the tubes used on the tubing system (6) including several orifices (8) along their length.
